# EUROPEAN PATENT APPLICATION

(11) **EP 4 821 662 A1**
(43) Date of publication of application: **14.10.2026**
(21) Application number: 25382351.2
(22) Date of filing: 07.04.2025
(51) Int. Cl.: B29C 65/00, B29C 65/36, B29L 31/30

(54) **INDUCTION WELDING MONITORING SYSTEM**

(71) Applicant: The Boeing Company, Arlington, VA 22202 (US)
(72) Inventor: MARTIN, Pedro P., 28042 MADRID (ES)
(74) Representative: ZBM Patents - Zea, Barlocci & Markvardsen

(57) **Abstract**

Induction welding monitoring systems and methods of use are presented. The induction welding monitoring system comprises an electromagnetic field (EMF) sensor array extending the length of a weld interface, the EMF sensor array comprising a plurality of sets of sensors, a multichannel oscilloscope, and a switching system connecting the EMF sensor array to the multichannel oscilloscope and configured to switch between sets of sensors of the plurality of sets of sensors.

## Description

### BACKGROUND INFORMATION

### Field:

The present disclosure relates generally to composite manufacturing and more specifically to induction welding of composite parts.

### Background:

Thermoplastic composite parts comprise a thermoplastic matrix and reinforcing fibers, such as carbon fibers. To join thermoplastic composite parts, the thermoplastic composite parts may be induction welded to form an integral composite structure.

Induction welding uses electromagnetic induction to heat composite parts without contacting the surface of the composite parts. During induction welding, heat is generated in the composite parts by reactions of fibers in the composite parts to an applied magnetic field. The heat generated by the fibers increases the temperature of the thermoplastic matrix to a melting temperature at an interface of the composite parts. At the melting temperature, the thermoplastic material from the composite parts combines to weld the composite parts together.

Controlling the temperature at which an induction weld is performed can be undesirably difficult. If an induction weld is not performed within a specific temperature range, the weld may not be in conformance with desired parameters.

Variances such as material variances, fabrication process variances, or others between different batches of the same configuration may affect the current-temperature relationship for induction welding and thereby the electrical current value required to achieve the predetermined welding temperature. In some welding operations, variances between different batches of the same configuration are compensated for by performing a witness weld for each joint on a witness panel and adjusting the value of the electrical current based on the witness panel. However, creating witness panels is time consuming and costly.

Therefore, it would be desirable to have a method and apparatus that takes into account at least some of the issues discussed above, as well as other possible issues.

### SUMMARY

An embodiment of the present disclosure provides an induction welding monitoring system. The induction welding monitoring system comprises an electromagnetic field (EMF) sensor array extending the length of a weld interface, the EMF sensor array comprising a plurality of sets of sensors, a multi-channel oscilloscope, and a switching system connecting the EMF sensor array to the multi-channel oscilloscope and configured to switch between sets of sensors of the plurality of sets of sensors.

An embodiment of the present disclosure provides an induction welding analysis system. The induction welding analysis system comprises an EMF sensor array comprising a quasi-continuous line of sensors, a multi-channel oscilloscope, and a multiplexed line signal switching system connecting the EMF sensor array to the multi-channel oscilloscope.

An embodiment of the present disclosure provides a method of induction welding. An induction welding coil is operated along a weld path to form a weld interface between a first part comprising a thermoplastic composite material and a second part comprising a thermoplastic composite material. Magnetic field strength is measured along the weld interface using an EMF sensor array extending along the length of the weld interface, wherein the EMF sensor array comprises a plurality of sets of sensors. A set of sensors of the plurality of sets of sensors transmitting to a multi-channel oscilloscope connected to the EMF sensor array is switched by a switching system connecting the EMF sensor array to the multi-channel oscilloscope based on a location of the induction welding coil as it moves along the weld path.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a top view of an EMF sensor array in accordance with an illustrative embodiment;
**Figure 4** is an illustration of a multiplexed line signal switching system in accordance with an illustrative embodiment;
**Figure 5** is an illustration of a layout of an induction welding monitoring system in accordance with an illustrative embodiment;
**Figure 6** is a flowchart of a method of induction welding in accordance with an illustrative embodiment;
**Figure 7** is an illustration of an aircraft manufacturing and service method in a form of a block diagram in accordance with an illustrative embodiment; and
**Figure 8** is an illustration of an aircraft in a form of a block diagram in which an illustrative embodiment may be implemented.

### DETAILED DESCRIPTION

The illustrative examples recognize and take into account several considerations. The illustrative examples recognize and take into account that induction welding of thermoplastic composites is done by establishing heating surveys with set-up welds and thermocouples in the weld line for a given configuration of the assembly. The illustrative examples recognize and take into account that the heating surveys generate a current-temperature relationship for the system.

The illustrative examples recognize and take into account that the current-temperature relationship is used to select a current to target the Weld Temperature (Tweld). The illustrative examples recognize and take into account that the current-temperature relationship is affected by materials, layup, manufacturing history, geometry, overlap region and tooling which in turn determines the current, pressure, and speed needed to obtain a successful joint. The illustrative examples recognize and take into account that the welding speed and pressure are conventionally kept constant for a given configuration once established. The illustrative examples recognize and take into account that obtaining the current for a given configuration depends on the variance of the composite due to material batch and/or part fabrication process. The illustrative examples recognize and take into account that accounting for material variations during induction welding can be both time consuming and costly.

The illustrative examples recognize and take into account that variability of the current setting due to prepreg material batch and part fabrication can be overcome by establishing a process window that accommodates the variances. The illustrative examples recognize and take into account that the process window upper temperature limit and heat affected zone can be accounted for in the tooling configuration. The illustrative examples recognize and take into account that accounting for material variances through tooling configuration increases tooling costs and complexity. The illustrative examples recognize and take into account that accounting for material variances through tooling configuration utilizes extensive testing to establish the desired process capability index.

The illustrative examples recognize and take into account that another method for accounting for material variances includes creating a witness weld for each assembly joint and adjusting current accordingly. The illustrative examples recognize and take into account that witness welds can be undesirably time consuming and costly.

The illustrative examples recognize and take into account that induction welding occurs in a closed system, making it difficult to monitor the process. The illustrative examples recognize and take into account that current technologies for monitoring inductive welding includes increased tooling and material costs, complexity, and a requirement of extensive testing equipment/setup, for example, using a witness weld increases materials costs (in addition to increased production of residue).

The illustrative examples present methods of continually monitoring and controlling the induction welding process. The illustrative examples provide an induction welding monitoring system comprising an EMF sensor array, multi-channel oscilloscope, and a switching system.

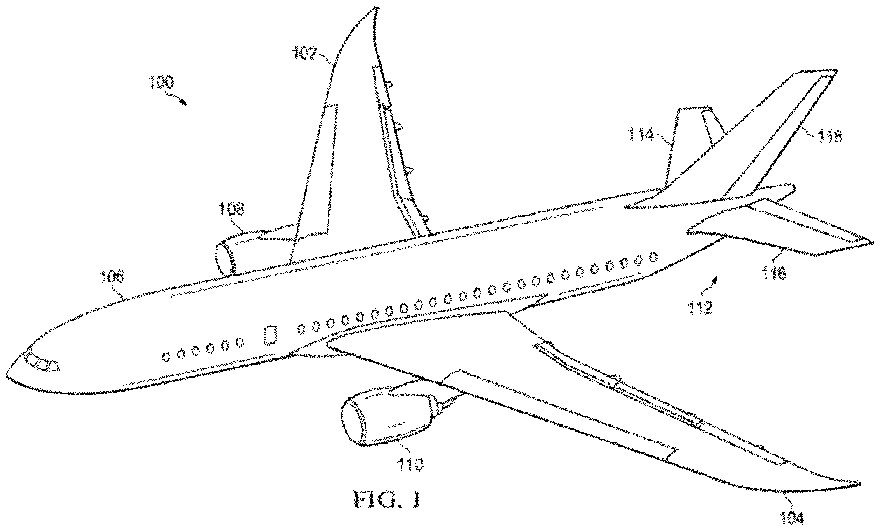

Turning now to **Figure 1****,** an illustration of an aircraft is depicted in accordance with an illustrative embodiment. Aircraft **100** has wing **102** and wing **104** attached to body **106.** Aircraft 100 includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have thermoplastic composite components assembled through induction welding. Aircraft **100** is an example of an aircraft that can have thermoplastic composite components manufactured using an induction welding monitoring system of the illustrative examples. Aircraft **100** is an example of an aircraft that can have thermoplastic composite components manufactured according to methods of the illustrative examples.

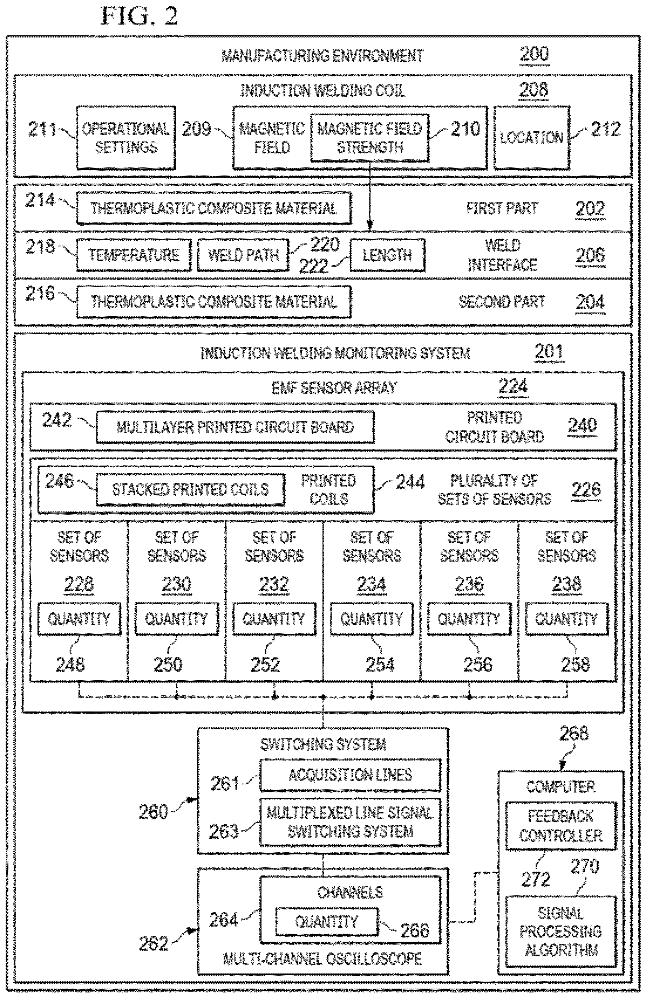

Turning now to **Figure 2****,** an illustration of a block diagram of a manufacturing environment is depicted in accordance with an illustrative embodiment.

Induction welding monitoring system **201** can be used during induction welding of first part **202** and second part **204** to form weld interface **206.** In this illustrative example, first part **202** is formed of thermoplastic composite material **214.** In this illustrative example, second part **204** is formed of thermoplastic composite material **216.** In some illustrative examples, thermoplastic composite material **214** is the same as thermoplastic composite material **216.** In some illustrative examples, thermoplastic composite material **214** is different from thermoplastic composite material **216.**

Although each of first part **202** or second part **204** are formed of a thermoplastic composite material, first part **202** and second part **204** can be formed of any desirable material suitable for induction welding. In some illustrative examples, first part **202** and second part **204** can comprise at least one of polyetheretherketone (PEEK), polyetherketoneketone (PEKK), or any other desirable thermoplastic material reinforced with carbon fibers or any other desirably electrically conductive fibers.

Induction welding of first part **202** and second part **204** is performed using induction welding coil **208.** Induction welding coil **208** generates magnetic field **209** at one side of first part **202** and second part **204** in response to applied current.

Magnetic field strength **210** of magnetic field **209** generated by induction welding coil **208** is based on the amount of current applied. Thus, induction welding coil **208** is controllably adjusted in order to generate magnetic field **209** having a desirable value for magnetic field strength **210.**

A controller can control an amount of current applied to induction welding coil **208** in order to increase or decrease magnetic field strength **210** of magnetic field **209** generated by induction welding coil **208.** Magnetic field **209** controls a temperature of weld interface **206** between first part **202** and second part **204** where induction welding is desired.

In response to experiencing magnetic field **209,** fibers in thermoplastic composite material **214** and fibers in thermoplastic composite material **216** act as susceptors and generate heat. Magnetic field **209** generated by induction welding coil **208** causes first part **202** and second part **204** to reach a transition temperature. At the transition temperature, first part **202** and second part **204** weld together at weld interface **206** into an integral structure at weld interface **206.** Weld interface **206** extends length **222** along first part **202** and second part **204.**

Induction welding monitoring system **201** can be used to monitor temperature **218** of weld interface **206** during induction welding. Induction welding monitoring system **201** can be used to provide data to feedback controller **272** for control of applied current provided to induction welding coil **208.**

Induction welding monitoring system **201** comprises electromagnetic field (EMF) sensor array **224** extending length **222** of weld interface **206,** multi-channel oscilloscope **262,** and switching system **260** connecting EMF sensor array **224** to multi-channel oscilloscope **262** and configured to switch between sets of sensors of plurality of sets of sensors **226.** In some examples EMF sensor array **224** comprises plurality of sets of sensors **226.**

In this illustrative example, plurality of sets of sensors **226** comprises six sets of sensors: set of sensors **228,** set of sensors **230,** set of sensors **232,** set of sensors **234,** set of sensors **236,** and set of sensors **238.** Set of sensors **228** has quantity **248** of sensors. Set of sensors **230** has quantity **250** of sensors. Set of sensors **232** has quantity **252** of sensors. Set of sensors **234** has quantity **254** of sensors. Set of sensors **236** has quantity **256** of sensors. Set of sensors **238** has quantity **258** of sensors. In some illustrative examples, each of quantity **248,** quantity **250,** quantity **252,** quantity **254,** quantity **256,** and quantity **258** are the same. In some illustrative examples, at least one of quantity **248,** quantity **250,** quantity **252,** quantity **254,** quantity **256,** and quantity **258** is different from other quantities.

EMF sensors of EMF sensor array **224** measure voltage indicative of magnetic field strength **210.** Each EMF sensor is configured to measure a field intensity of magnetic field **209** generated by induction welding coil **208** at the location of the respective EMF sensor in EMF sensor array **224** along length **222** of weld interface **206.** Each respective EMF sensor monitors a response of thermoplastic composite material **214** and thermoplastic composite material **216** of first part **202** and second part **204** at the location of the respective EMF sensor to electrical current swept through induction welding coil **208.** Each EMF sensor includes any type of EMF sensor configured to measure magnetic field strength **210** and/or intensity. Induction welding monitoring system **201** can include any quantity of EMF sensors in EMF sensor array **224.**

In some implementations, a sensor profile of EMF sensor array **224** is stored. For example, the location of each sensor and of each set of sensors of plurality of sets of sensors **226** along length **222** of weld interface **206** can be stored in a database. In some illustrative examples, the location of each sensor and of each set of sensors of plurality of sets of sensors **226** along length **222** of weld interface **206** can be stored in computer **268.**

The location of each sensor in EMF sensor array **224** relative to first part **202** and second part **204** can be used in conjunction with location **212** of induction welding coil **208** to switch between plurality of sets of sensors **226** in communication with multi-channel oscilloscope **262.**

Measurements of a desired quality can be provided by a sampling rate at least 100 times higher than the frequency of the applied field of around 1 MHz. A sampling rate high enough to provide measurements of a desired quality generates huge data files. The processing of data is made by splitting them in blocks and calculating the root mean square (RMS) value of the signal over these blocks to extract the magnetic field to be used as input parameters for a control system, feedback controller **272.** The number of samples per block of raw data and the frequency of the RMS data points acquired determines the accuracy of the signal. A block too small results in an RMS with a significant error. A block too long increases the measurement time of the oscilloscope, resulting in a low acquisition frequency and thus a lower number of data points per time interval. The balance between sampling rate and block length is controlled to provide a good noise to signal ratio.

A response of an EMF sensor is immediate, and a peak happens when induction welding coil **208** is directly above the respective sensor in EMF sensor array **224.** Induction welding monitoring system **201** establishes the current - magnetic field strength **210** - temperature **218** response in a quasi-continuous way.

In some illustrative examples, the size of each individual sensor in EMF sensor array **224** is below three millimeters. In some illustrative examples, the size of each individual sensor allows integrating a large quantity of sensors along weld interface **206.** In some illustrative examples, the size of each individual sensor allows two hundred sensors in a twenty four inch welded component. In these illustrative examples the EMF sensor array 224 comprises a plurality of sets of sensors 226 adjacent to each other separated by a space less than 1mm, for example, separated by a space of 0.05mm or separated by a space of 0.048 mm or separated by a space of 0.04 mmm.

In some illustrative examples, EMF sensor array 224 comprises plurality of sets of sensors 226 adjacent to each other. In examples the plurality of sets of sensors 226 are adjacent to each other to allow a quasi-continuous or semi-continuous measure of a magnetic field along a weld interface. In some illustrative examples, EMF sensor array **224** comprises plurality of sets of sensors **226** without gaps between sensors. Without gaps between sensors may comprise intermittently spaced. Reducing space between sensors in EMF sensor array **224** by reducing the size of the sensors provides a better follow up and control of temperature **218** along weld interface **206.** Providing plurality of sets of sensors **226** without gaps between sensors substantially reduces or eliminates areas of weld interface **206** with no temperature feedback. Better control of temperature **218** along weld interface **206** is accomplished through reduced or eliminated areas of weld interface **206** with no temperature feedback.

Gaps would generate a discontinuity in the signal measured. Measuring temperature **218** throughout length **222** of weld interface **206** is important at the start and stop welding areas where strong edge effects happen, modifying temperature **218** in weld interface **206** of the assembly.

Induction welding monitoring system **201** can be improved by reducing the size of EMF sensors by using printed coils in a printed circuit board (PCB). Induction welding monitoring system **201** can be improved by reducing the size of EMF sensors by stacking multiple printed coils in a multilayer PCB to multiply the signal strength. In some illustrative examples, EMF sensor array **224** comprises printed coils **244** on printed circuit board **240.** In some illustrative examples, each sensor of EMF sensor array **224** comprises stacked printed coils **246** on multilayer printed circuit board **242.**

In some illustrative examples, EMF sensor array **224** comprises sensors adjacent to each other to quasi-continuously or semi-continuously measure a magnetic field along a weld interface. In some illustrative examples, EMF sensor array **224** comprises a quasi-continuous line of sensors the quasi-continuous line of sensors provides to quasi-continuously measure a magnetic field along a weld interface.

Induction welding is improved by multiplexing acquisition lines **261** connecting each sensor of EMF sensor array **224** with a signal acquisition system comprising multi-channel oscilloscope **262.** In some illustrative examples, the signal acquisition system comprises multi-channel oscilloscope **262** and signal processing algorithm **270.** The reduced size of the sensors in EMF sensor array **224,** increased signal strength for stacked printed coils **246,** quantity of sensors in EMF sensor array **224,** and using multi-channel oscilloscope **262** and computer **268** to process the signal from each individual sensor can utilize auxiliary electronic systems (not depicted) to manage the high number of signals to be processed in real-time.

In some illustrative examples, each set of sensors of plurality of sets of sensors **226** comprises a quantity of sensors equivalent to quantity **266** of channels **264** of multi-channel oscilloscope **262.** In some illustrative examples, each of quantity **248,** quantity **250,** quantity **252,** quantity **254,** quantity **256,** and quantity **258** is equivalent to quantity **266** of channels of multi-channel oscilloscope **262.**

The illustrative examples allow switching acquisition lines **261** along the different sensors of EMF sensor array **224** synchronically with movement of induction welding coil **208.** The illustrative examples allow switching acquisition lines **261** to connect them to the acquisition system, multi-channel oscilloscope **262,** which has a limited quantity **266** of channels **264.** The generated overall output signal resembles a quasi-continuous signal, allowing continuous feedback of the control system, feedback controller **272.** The closest signal monitoring along the full length, length **222,** of weld interface **206,** allows providing accurate temperature control in areas where strong edge effects happen or where the thickness of at least one of first part **202** or second part **204** changes.

In some illustrative examples, switching system **260** is synchronized with location **212** of induction welding coil **208.** As result of applying EMF sensor array **224** with multiplexed line signal switching system **263** and multi-channel oscilloscope **262,** the capability of the control system improves by using feedback controller **272.**

By using EMF sensor array **224** in combination with switching system **260** and multi-channel oscilloscope **262,** there is no discontinuity of the control signal. EMF sensor array **224** combined with the multiplexed line signal switching system **263** synchronized with movement of induction welding coil **208** generates a quasi-continuous signal.

Feedback controller **272** receives data from multi-channel oscilloscope **262.** In some illustrative examples, feedback controller **272** receives data from signal processing algorithm **270.** By using EMF sensor array **224** in combination with switching system **260** and multi-channel oscilloscope **262** the quasi-continuous signal is suitable for a close-loop control system such as a Proportional-Integral-Derivative (PID) algorithm.

In some illustrative examples, induction welding monitoring system **201** comprises an EMF sensor array **224** comprising a quasi-continuous line of sensors, a multi-channel oscilloscope **262,** and multiplexed line signal switching system **263** connecting EMF sensor array **224** to multi-channel oscilloscope **262.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, plurality of sets of sensors **226** comprises more than six sets of sensors. In some illustrative examples, plurality of sets of sensors **226** comprises at least one set of sensors that has a different quantity of sensors than the other sets of sensors.

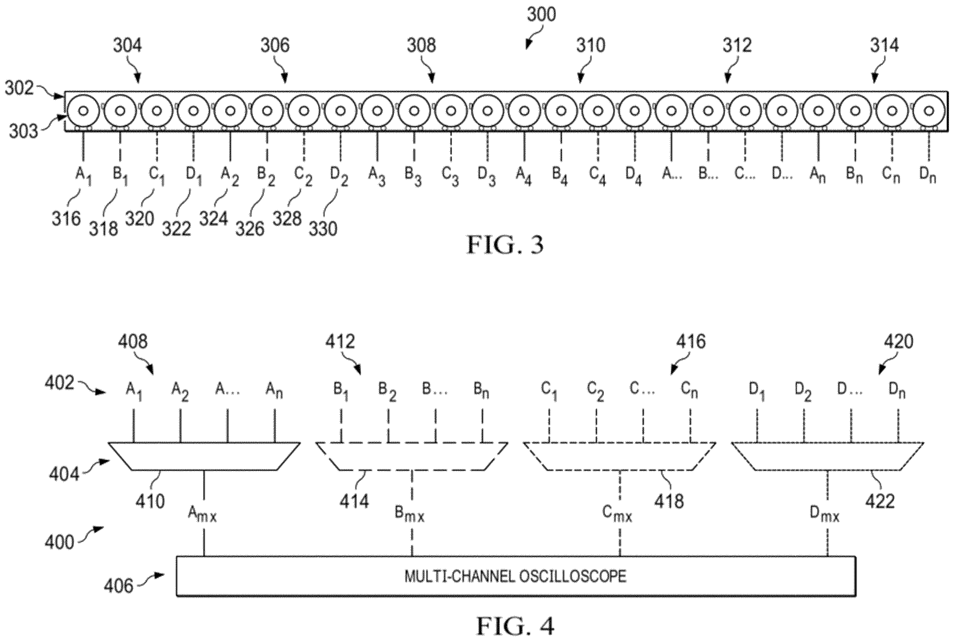

Turning now to **Figure 3****,** an illustration of a top view of an EMF sensor array is depicted in accordance with an illustrative embodiment. EMF sensor array **300** can be used during induction welding of a component of aircraft **100** of **Figure 1****.** EMF sensor array **300** can be a physical implementation of EMF sensor array **224** of **Figure 2****.**

EMF sensor array **300** comprises printed circuit board **302** with plurality of sets of sensors **303.** EMF sensor array **300** comprises plurality of sets of sensors **303** without gaps between sensors. Plurality of sets of sensors **303** are arranged in a line. EMF sensor array **300** comprises a quasi-continuous line of sensors.

In this illustrative example, plurality of sets of sensors **303** comprises set of sensors **304,** set of sensors **306,** set of sensors **308,** set of sensors **310,** set of sensors **312,** and set of sensors **314.** In some illustrative examples, each set of sensors of plurality of sets of sensors **303** comprises a quantity of sensors equivalent to a quantity of channels of a multi-channel oscilloscope.

In this illustrative example, each set of sensors of plurality of sets of sensors **303** has four sensors. For example, set of sensors **304** comprises sensor **316,** sensor **318,** sensor **320,** and sensor **322.** As depicted, set of sensors **306** comprises sensor **324,** sensor **326,** sensor **328,** and sensor **330.**

In some illustrative examples, EMF sensor array **300** comprises printed coils on printed circuit board **302.** In some illustrative examples, each sensor of EMF sensor array **300** comprises stacked printed coils on a multilayer printed circuit board, printed circuit board **302.**

EMF sensor array **300** can be part of an induction welding monitoring system. EMF sensor array **300** can be connected to a multi-channel oscilloscope by a switching system. In some illustrative examples, the switching system is synchronized with a location of an induction welding coil.

Turning now to **Figure 4****,** an illustration of a multiplexed line signal switching system is depicted in accordance with an illustrative embodiment. Multiplexed line signal switching system **400** can be used to monitor welding of composite parts of aircraft **100** of **Figure 1****.** Multiplexed line signal switching system **400** can be an implementation of multiplexed line signal switching system **263** of **Figure 2****.** Multiplexed line signal switching system **400** can be used to switch between signals of EMF sensor array **300** of **Figure 3****.**

Multiplexed line signal switching system **400** comprises acquisition lines **402** from a plurality of sensors. Acquisition lines **402** can be connected to an EMF sensor array, such as EMF sensor array **224** of **Figure 2****.**

Multiplexed line signal switching system **404** switches between signals from acquisition lines **402.** Multiplexed line signal switching system **404** connects acquisition lines **402** to multi-channel oscilloscope **406.**

First acquisition lines **408** are connected to first line signal switch **410.** First line signal switch **410** switches between first acquisition lines **408** from a first sensor of each of a plurality of sets of sensors. First line signal switch **410** switches which acquisition line of first acquisition lines **408** is sending signals to a first channel of multi-channel oscilloscope **406.**

Second acquisition lines **412** are connected to second line signal switch **414.** Second line signal switch **414** switches between second acquisition lines **412** from a second sensor of each of a plurality of sets of sensors. Second line signal switch **414** switches which acquisition line of second acquisition lines **412** is sending signals to a second channel of multi-channel oscilloscope **406.**

Third acquisition lines **416** are connected to third line signal switch **418.** Third line signal switch **418** switches between third acquisition lines **416** from a third sensor of each of a plurality of sets of sensors.

Fourth acquisition lines **420** are connected to fourth line signal switch **422.** Fourth line signal switch **422** switches between fourth acquisition lines **420** from a fourth sensor of each of a plurality of sets of sensors.

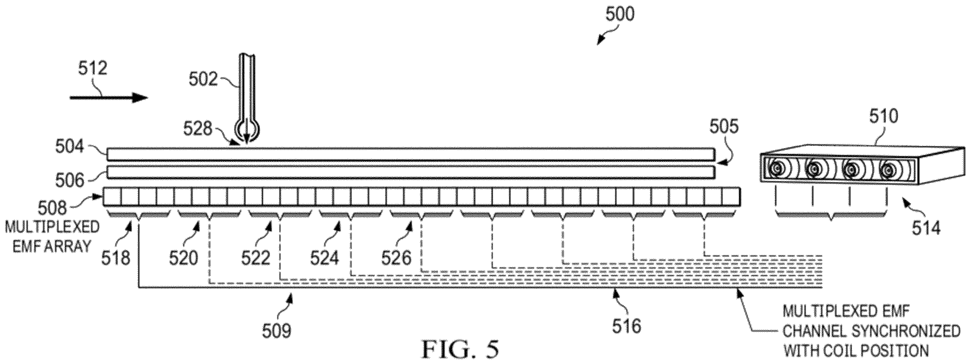

Turning now to **Figure 5****,** an illustration of a layout of an induction welding monitoring system is depicted in accordance with an illustrative embodiment. A component of aircraft **100** of **Figure 1** can be induction welded within manufacturing environment **500** of **Figure 5****.** EMF sensor array **508** in manufacturing environment **500** can be a physical implementation of EMF sensor array **224** of **Figure 2****.** In some illustrative examples, EMF sensor array **508** in manufacturing environment 500 can comprise a printed circuit board similar to EMF sensor array **300** of **Figure 3****.** In some illustrative examples, multiplexed line signal switching system **400** of **Figure 4** can be an example of switching system **516** of **Figure 5****.**

Induction welding coil **502** travels along weld path **512** to weld first part **504** and second part **506.** Weld interface **505** is formed between first part **504** and second part **506.**

EMF sensor array **508** measures magnetic field strength provided by induction welding coil **502** along the length of weld interface **505.** The quantity of sensors and size of sensors in EMF sensor array **508** provide data for feedback control of induction welding of first part **504** and second part **506.** EMF sensor array **508** comprises plurality of sets of sensors **509.** In this illustrative example, plurality of sets of sensors **509** comprises set of sensors **518,** set of sensors **520,** set of sensors **522,** set of sensors **524,** and set of sensors **526.** Plurality of sets of sensors **509** comprises additional sets of sensors not specifically labeled in **Figure 5****.**

EMF sensor array **508** is connected to multi-channel oscilloscope **510** by switching system **516.** Multi-channel oscilloscope **510** comprises channels **514.** In this illustrative example, channels **514** comprises four channels. In this illustrative example, plurality of sets of sensors **509** comprises sets of four sensors.

Switching system **516** switches between plurality of sets of sensors **509** based on location **528** of induction welding coil **502.** As induction welding coil **502** travels along weld path **512,** switching system **516** switches from signals from set of sensors **518** to signals from set of sensors **520.** Switching system **516** will sequentially move from set of sensors **520** to set of sensors **522,** followed by set of sensors **524,** then set of sensors **526,** and subsequent sets of sensors along weld path **512.**

Induction welding using EMF sensor array **508** forms a quasi-continuous electromagnetic field signal that can be used to feed a feedback control system. Induction welding using EMF sensor array **508** forms a quasi-continuous electromagnetic field signal that can be used for validation of part quality.

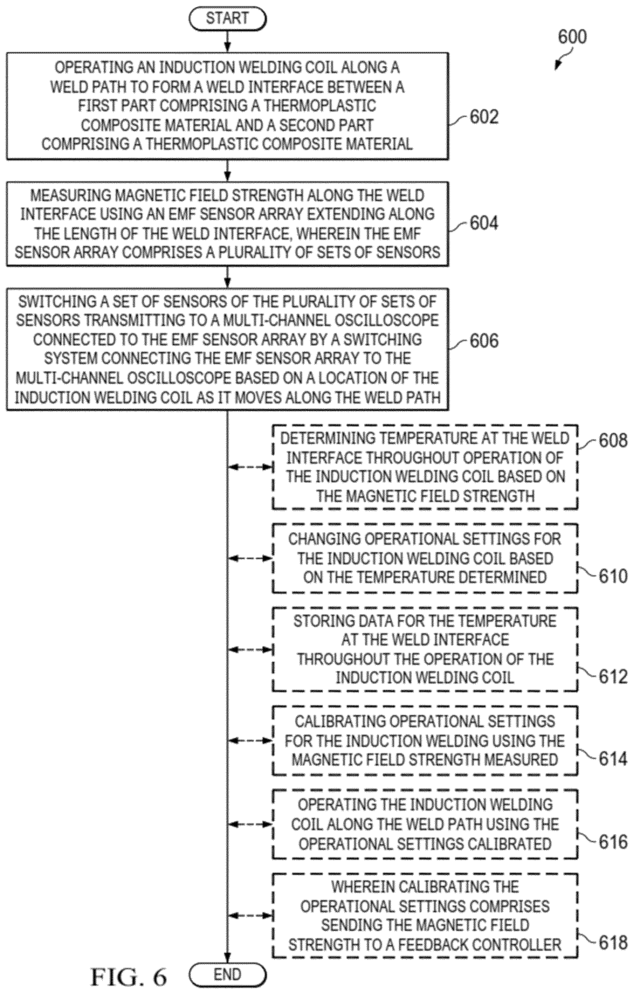

Turning now to **Figure 6****,** a flowchart of a method of induction welding is depicted in accordance with an illustrative embodiment. Method **600** can be used to induction weld a thermoplastic composite component of aircraft **100** of **Figure 1****.** Method **600** can be performed using induction welding monitoring system **201** of **Figure 2****.** Method **600** can be performed using EMF sensor array **300** of **Figure 3****.** Method **600** can be performed using multiplexed line signal switching system **400** of **Figure 4****.** Method **600** can be performed in manufacturing environment **500** of **Figure 5****.**

Method **600** operates an induction welding coil along a weld path to form a weld interface between a first part comprising a thermoplastic composite material and a second part comprising a thermoplastic composite material (operation **602).** Method **600** measures magnetic field strength along the weld interface using an EMF sensor array extending along the length of the weld interface, wherein the EMF sensor array comprises a plurality of sets of sensors (operation **604).** Method **600** switches a set of sensors of the plurality of sets of sensors transmitting to a multi-channel oscilloscope connected to the EMF sensor array by a switching system connecting the EMF sensor array to the multi-channel oscilloscope based on a location of the induction welding coil as it moves along the weld path (operation **606).** Afterwards, method **600** terminates.

In some illustrative examples, method **600** determines temperature at the weld interface throughout operation of the induction welding coil based on the magnetic field strength (operation **608).** In some illustrative examples, method **600** changes operational settings for the induction welding coil based on the temperature determined (operation **610).**

In some illustrative examples, method **600** stores data for the temperature at the weld interface throughout the operation of the induction welding coil (operation **612).** In some illustrative examples, the stored data for the temperature at the weld interface is used to verify the quality of the resulting weld.

In some illustrative examples, method **600** calibrates operational settings for the induction welding using the magnetic field strength measured (operation **614).** In some illustrative examples, method **600** operates the induction welding coil along the weld path using the operational settings calibrated (operation **616).**

In some illustrative examples, calibrating the operational settings comprises sending the magnetic field strength to a feedback controller (operation **618).** In some illustrative examples, the feedback controller is operated by a PID (Proportional-Integral-Derivative) algorithm. In some illustrative examples, the feedback controller can be referred to as a "control system".

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **608** through operation **618** may be optional.

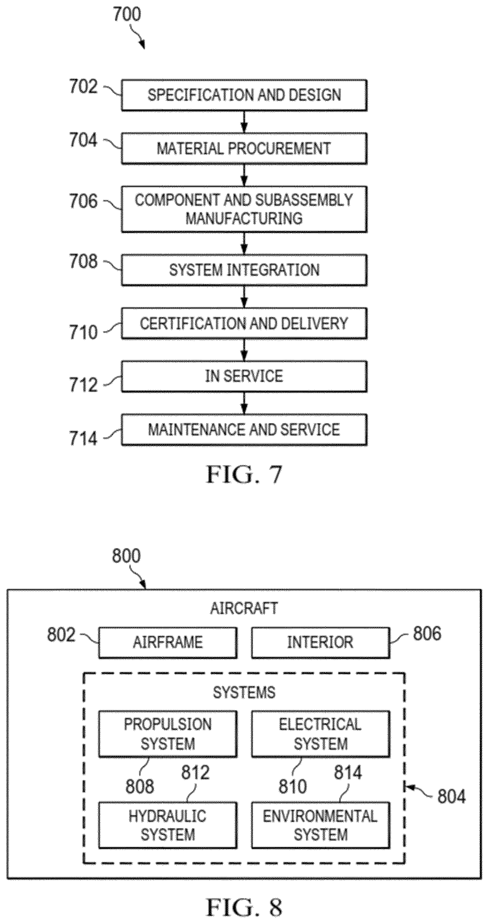

Illustrative embodiments of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method in a form of a block diagram is depicted in accordance with an illustrative embodiment. During pre-production, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative embodiment may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative embodiments may be manufactured or used during at least one of component and subassembly manufacturing **706,** system integration **708,** in service **712,** or maintenance and service **714** of **Figure 7****.**

The illustrative examples provide improvements to the induction welding process. The illustrative examples provide automation of a variable current during induction welding. A process of the illustrative examples uses a series of Electromagnetic Field (EMF) discrete sensors to form a quasi-continuous electromagnetic field signal to feed a control system. In some illustrative examples, the control system is operated by a PID (Proportional-Integral-Derivative) algorithm.

The quasi-continuous electromagnetic field signal together with previously determined baseline data and configuration relationship (calibration fit response) can be used to fit a current value to overcome material and or blank fabrication variability. The quasi-continuous electromagnetic field signal can be used to vary current for configuration changes, such as variations in thickness along the weld path.

The illustrative examples provide coupling of a quasi-continuous EMF feedback to establish predictive induction welding logic. The illustrative examples utilize the continuity of the Current-Temperature-Field Intensity signal using the EMF sensor array.

The illustrative examples can be used to configure induction welding tooling logic to predict current settings to overcome material variability "in-situ". The illustrative examples can be used to weld varying thickness profiles "in-situ".

The illustrative examples provide the ability to predict current without using witness coupons. Predicting the current without using witness coupons decreases production costs and enables variable thickness in the design space. The illustrative examples can save the cost of the materials, fabrication and assembly of a witness coupon per weld.

The illustrative examples comprise an array of miniaturized EMF sensors. The configuration of the array of EMF sensors in the illustrative examples improves the signal-to-noise ratio. The illustrative examples present an array of EMF sensors printed on a circuit board (PCB). The illustrative examples present a system with a multiplexed line signal switching mechanism to synchronize the recording of the EMF signals with the coil movement. Use of the multiplexed line signal switching mechanism to synchronize the recording of the EMF signals with the coil movement allows the recording of a quasi-continuous EMF signal. The EMF signals can be used to feed an acquisition/control system operated by a PID (Proportional-Integral-Derivative) algorithm.

The illustrative examples enable elimination of blind weld regions with no temperature feedback. The illustrative examples enable in-situ correction of the EMF applied to the part to account for variations in materials layup or part thickness. The illustrative examples enable verification of a good quality weld across the part. The illustrative examples enable increasing the efficiency of induction welding processes.

Further, the disclosure comprises examples according to the following clauses:
Clause 1. An induction welding monitoring system comprising:
   an electromagnetic field (EMF) sensor array extending a length of a weld interface, the EMF sensor array comprising a plurality of sets of sensors;
   a multi-channel oscilloscope; and
   a switching system connecting the EMF sensor array to the multi-channel oscilloscope and configured to switch between sets of sensors of the plurality of sets of sensors.
Clause 2. The induction welding monitoring system of clause 1, wherein the EMF sensor array comprises the plurality of sets of sensors without gaps between sensors.
Clause 3. The induction welding monitoring system of clause 1 or 2, wherein each set of sensors of the plurality of sets of sensors comprises a quantity of sensors equivalent to a quantity of channels of the multi-channel oscilloscope.
Clause 4. The induction welding monitoring system of any one of clauses 1 to 3, wherein the EMF sensor array comprises printed coils on a printed circuit board.
Clause 5. The induction welding monitoring system of any one of clauses 1 to 4, wherein each sensor of the EMF sensor array comprises stacked printed coils on a multilayer printed circuit board.
Clause 6. The induction welding monitoring system of any one of clauses 1 to 5, wherein the EMF sensor array comprises a quasi-continuous line of sensors.
Clause 7. The induction welding monitoring system of any one of clauses 1 to 6 further comprising a feedback controller receiving data from the multi-channel oscilloscope.
Clause 8. The induction welding monitoring system of any one of clauses 1 to 7, wherein the switching system is synchronized with a location of an induction welding coil.
Clause 9. An induction welding analysis system comprising:
   an EMF sensor array comprising a quasi-continuous line of sensors;
   a multi-channel oscilloscope; and
   a multiplexed line signal switching system connecting the EMF sensor array to the multi-channel oscilloscope.
Clause 10. The induction welding monitoring system of clause 9 further comprising a feedback controller receiving data from the multi-channel oscilloscope.
Clause 11. The induction welding monitoring system of clause 9 or 10, wherein the EMF sensor array is without gaps between sensors.
Clause 12. The induction welding monitoring system of any one of clauses 9 to 11, wherein the EMF sensor array comprises a plurality of sets of sensors, each set of sensors of the plurality of sets of sensors comprising a quantity of sensors equivalent to a quantity of channels of the multi-channel oscilloscope.
Clause 13. The induction welding monitoring system of any one of clauses 9 to 12, wherein the EMF sensor array comprises printed coils on a printed circuit board.
Clause 14. The induction welding monitoring system of any one of clauses 9 to 13, wherein each sensor of the EMF sensor array comprises stacked printed coils on a multilayer printed circuit board.
Clause 15. A method of induction welding comprising:
   operating an induction welding coil along a weld path to form a weld interface between a first part comprising a thermoplastic composite material and a second part comprising a thermoplastic composite material;
   measuring magnetic field strength along the weld interface using an EMF sensor array extending along a length of the weld interface, wherein the EMF sensor array comprises a plurality of sets of sensors; and
   switching a set of sensors of the plurality of sets of sensors transmitting to a multi-channel oscilloscope connected to the EMF sensor array by a switching system connecting the EMF sensor array to the multi-channel oscilloscope based on a location of the induction welding coil as it moves along the weld path.
Clause 16. The method of clause 15 further comprising determining temperature at the weld interface throughout operation of the induction welding coil based on the magnetic field strength.
Clause 17. The method of clause 16 further comprising: changing operational settings for the induction welding coil based on the temperature determined.
Clause 18. The method of clause 16 or 17 further comprising: storing data for the temperature at the weld interface throughout the operation of the induction welding coil.
Clause 19. The method of any one of clauses 15 to 18 further comprising: calibrating operational settings for the induction welding using the magnetic field strength measured; and
   operating the induction welding coil along the weld path using the operational settings calibrated.
Clause 20. The method of clause 19, wherein calibrating the operational settings comprises sending the magnetic field strength to a feedback controller.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An induction welding monitoring system comprising:
an electromagnetic field (EMF) sensor array extending a length of a weld interface, the EMF sensor array comprising a plurality of sets of sensors;
a multi-channel oscilloscope; and
a switching system connecting the EMF sensor array to the multi-channel oscilloscope and configured to switch between sets of sensors of the plurality of sets of sensors.

2. The induction welding monitoring system of claim 1, wherein the EMF sensor array comprises the plurality of sets of sensors without gaps between sensors.

3. The induction welding monitoring system of claim 1 or 2, wherein each set of sensors of the plurality of sets of sensors comprises a quantity of sensors equivalent to a quantity of channels of the multi-channel oscilloscope.

4. The induction welding monitoring system of any one of claims 1 to 3, wherein the EMF sensor array comprises printed coils on a printed circuit board.

5. The induction welding monitoring system of any one of claims 1 to **4,** wherein each sensor of the EMF sensor array comprises stacked printed coils on a multilayer printed circuit board.

6. The induction welding monitoring system of any one of claims 1 to 5, wherein the EMF sensor array comprises a quasi-continuous line of sensors.

7. The induction welding monitoring system of any one of claims 1 to 6 further comprising a feedback controller receiving data from the multi-channel oscilloscope.

8. The induction welding monitoring system of any one of claims 1 to 7, wherein the switching system is synchronized with a location of an induction welding coil.

9. An induction welding analysis system comprising:
an EMF sensor array comprising a quasi-continuous line of sensors;
a multi-channel oscilloscope; and
a multiplexed line signal switching system connecting the EMF sensor array to the multi-channel oscilloscope.

10. The induction welding monitoring system of claim 9 further comprising a feedback controller receiving data from the multi-channel oscilloscope.

11. The induction welding monitoring system of claim 9 or 10, wherein the EMF sensor array is without gaps between sensors.

12. The induction welding monitoring system of any one of claims 9 to 11, wherein the EMF sensor array comprises a plurality of sets of sensors, each set of sensors of the plurality of sets of sensors comprising a quantity of sensors equivalent to a quantity of channels of the multi-channel oscilloscope.

13. The induction welding monitoring system of any one of claims 9 to 12, wherein the EMF sensor array comprises printed coils on a printed circuit board.

14. The induction welding monitoring system of any one of claims 9 to 13, wherein each sensor of the EMF sensor array comprises stacked printed coils on a multilayer printed circuit board.

15. A method of induction welding comprising:
operating an induction welding coil along a weld path to form a weld interface between a first part comprising a thermoplastic composite material and a second part comprising a thermoplastic composite material;
measuring magnetic field strength along the weld interface using an EMF sensor array extending along a length of the weld interface, wherein the EMF sensor array comprises a plurality of sets of sensors; and
switching a set of sensors of the plurality of sets of sensors transmitting to a multi-channel oscilloscope connected to the EMF sensor array by a switching system connecting the EMF sensor array to the multi-channel oscilloscope based on a location of the induction welding coil as it moves along the weld path.
